# EUROPEAN PATENT APPLICATION

(11) **EP 4 834 961 A1**
(43) Date of publication of application: **04.11.2026**
(21) Application number: 24912752.3
(22) Date of filing: 23.12.2024
(51) Int. Cl.: C08F 214/26, C08F 210/02, C08K 5/02, C08L 27/18

(54) **SOLID MATERIAL, COMPOSITION, AND MOLDED BODY**

(30) Priority: 27.12.2023 JP 2023221100
(71) Applicant: AGC Inc., Chiyoda-ku Tokyo 100-8405 (JP)
(72) Inventor: TAGUCHI Daisuke, Tokyo 100-8405 (JP); TOYODA Mizuna, Tokyo 100-8405 (JP); YANAGAWA Haruki, Tokyo 100-8405 (JP)
(74) Representative: Müller-Boré & Partner Patentanwälte PartG mbB
(86) International application number: PCT/JP2024/045531
(87) International publication number: WO 2025/142865

(57) **Abstract**

The object of the present invention is to provide a solid material capable of forming a molded product excellent in surface properties, a composition comprising the solid material, a molded product obtained by molding the solid material, and a molded product obtained by molding the composition. The solid material of the present invention is a solid material comprising: a copolymer having a unit based on tetrafluoroethylene, a unit based on ethylene, and a unit based on a specific compound selected from the group consisting of a compound represented by formula (1) CX¹₂=CX²(CF₂)ₘX³ and a compound represented by formula (2) CF₂=CF-O-(CF₂)ₙF; the specific compound; and a solvent that is a compound different from the specific compound; wherein the ratio of the content of the specific compound to the total content of the solvent and the specific compound is 50.0 mass% or less.

## Description

### TECHNICAL FIELD

The present invention relates to a solid material, a composition, and a molded product.

### BACKGROUND ART

An ethylene/tetrafluoroethylene copolymer (hereinafter also referred to as "ETFE") is excellent in heat resistance, weather resistance, electrical insulation, non-adhesiveness, water/oil repellency, etc., and has high moldability and mechanical strength among fluororesins. Thus, by a melt-molding method such as extrusion, blow molding, injection molding or rotational molding, various molded products such as electrical wire coverings, tubes, sheets, films, filaments, pump casings, joints, packings, linings and coatings have been produced.

For example, Patent Document 1 discloses a method for recovering a fluorinated ether, comprising a step of producing a wet copolymer by suspension polymerization, solution polymerization or bulk polymerization in the presence of a predetermined fluorinated ether, a step of heating the wet copolymer in a container to vaporize and discharge a volatile substance including the fluorinated ether, and a step of transferring the vaporized volatile substance to a cooling means and cool the volatile substance.

### PRIOR ART DOCUMENTS

### PATENT DOCUMENTS

Patent Document 1: Japanese Patent No. 5569660

### DISCLOSURE OF INVENTION

### TECHNICAL PROBLEM

ETFE is required to be excellent in various properties, when used as a material constituting a molded product, specifically, it is required to have a property capable of producing a molded product excellent in surface properties.

With reference to the method described in Patent Document 1, the present inventors have produced ETFE, evaluated a molded product formed by using the produced ETFE and as a result found that there is room for improvement regarding surface properties of the obtained molded product.

Under these circumstances, the object of the present invention is to provide a solid material capable of forming a molded product excellent in surface properties. Another object of the present invention is to provide a composition comprising the solid material, a molded product obtained by molding the solid material, and a molded product obtained by molding the composition.

### SOLUTION TO PROBLEM

The present inventors have conducted extensive studies on the above objects and found that a molded product excellent in surface properties can be obtained by using a solid material comprising a copolymer having a unit based on tetrafluoroethylene, a unit based on ethylene and a unit based on a specific compound to be described below; the specific compound; and a solvent that is a compound different from the specific compound, wherein the ratio of the content of the specific compound to the total content of the solvent and the specific compound is 50.0 mass% or less. The present invention has been accomplished on the basis of this discovery.

That is, the present inventors have found that the above objects can be achieved by the following configurations.
[1] A solid material comprising:
   a copolymer having a unit based on tetrafluoroethylene, a unit based on ethylene, and a unit based on a specific compound selected from the group consisting of a compound represented by formula (1) to be described below and a compound represented by formula (2) to be described below,
   the specific compound, and
   a solvent that is a compound different from the specific compound,
   wherein the ratio of the content of the specific compound to the total content of the solvent and the specific compound is 50.0 mass% or less.
[2] The solid material according to [1], wherein the content of the unit based on tetrafluoroethylene relative to all units contained in the copolymer is 48.00 to 64.90 mol%.
[3] The solid material according to [1] or [2], wherein the content of the unit based on ethylene relative to all units contained in the copolymer is 35.00 to 51.90 mol%.
[4] The solid material according to any one of [1] to [3], wherein the content of the unit based on the specific compound in the copolymer relative to all units contained in the copolymer is 0.10 to 5.00 mol%.
[5] The solid material according to any one of [1] to [4], wherein the solvent contains a fluorine-containing solvent.
[6] The solid material according to [5], wherein the fluorine-containing solvent contains at least one member selected from the group consisting of a chlorofluorocarbon, a perfluorocarbon, a hydrofluorocarbon and a hydrofluoroether.
[7] The solid material according to any one of [1] to [6], wherein the solvent contains water.
[8] The solid material according to any one of [1] to [7], wherein the content of the solvent relative to the total mass of the solid material is 0.01 to 2 mass%.
[9] The solid material according to any one of [1] to [8], which has a specific surface area of 0.3 m²/g or more.
[10] A composition comprising the solid material as defined in any one of [1] to [9], and at least one component selected from the group consisting of a resin other than the copolymer, a thermal stabilizer, an antioxidant, a coloring agent, an ultraviolet absorbing agent, a filler, a crosslinking agent, a crosslinking aid, and an organic peroxide.
[11] A molded product, obtained by molding the solid material as defined in any one of [1] to [10].
[12] A molded product, obtained by molding the composition as defined in [10].

### ADVANTAGEOUS EFFECTS OF INVENTION

According to the present invention, it is possible to provide a solid material capable of forming a molded product excellent in surface properties. Further, according to the present invention, it is possible to provide a composition comprising the solid material, a molded product obtained by molding the solid material, and a molded product obtained by molding the composition.

### DESCRIPTION OF EMBODIMENTS

Meanings of terms used in this specification are as follows.

" to " used to show a range of numerical values is used to include numerical values before and after it as the lower limit value and the upper limit value. In numerical ranges described stepwise in this specification, the upper limit value or the lower limit value described in a certain numerical range may be replaced with an upper limit value or a lower limit value of another numerical range described stepwise. In numerical ranges described in this specification, the upper limit value or the lower limit value described in a certain numerical range may be replaced with values indicated in Examples.

In this specification, as each component, a single type of a substance corresponding to the component may be used alone, or two or more types may be used in combination. In a case where two or more types are used in combination for each component, the content of the component means the total content of the substances used in combination, unless otherwise specified.

In this specification, a combination of two or more preferred embodiments corresponds to a more preferred embodiment.

A "unit" generically means an atomic group derived from one molecule of a monomer, directly formed by polymerization of the monomer, and an atomic group obtained by chemical conversion of a part of the atomic group. In the following, in some cases, a unit derived from an individual monomer will be referred to as the monomer name, followed by "unit".

A "TFE unit" is a unit based on tetrafluoroethylene of a copolymer, an "E unit" is a unit based on ethylene of the copolymer. Further, a "A unit" is a unit based on the specific compound to be described below.

A "solvent" means a substance that is liquid at 25°C under 1013 hPa.

### [Solid material]

The solid material of the present invention (hereinafter also referred to as "the present solid material") comprises a copolymer having a TFE unit, an E unit and an A unit based on the specific compound to be described below, and further comprises the specific compound and a solvent that is a compound different from the specific compound.

Further, the present solid material is characterized in that the ratio of the content of the specific compound to the total content of the solvent and the specific compound (hereinafter also referred to as "the ratio P") is 50.0 mass% or less.

By using the present solid material, it is possible to form a molded product having excellent surface properties. The detailed reason has not been clearly understood yet, but is estimated to be because in the present solid material, the content of the specific compound among the components used for production of the copolymer or the solid material is a predetermined value or less. The specific compound, which has a relatively high lipophilicity, is considered to readily remain in the solid material, and it is estimated that the solid material contains the specific compound in a larger amount as compared with the solvent, bubbles derived from the specific compound form by heating when a molded product is formed using the solid material. It is estimated that voids, which are traces of bubbles formed on the surface of the molded product, are generated resultingly.

Whereas in the present solid material, since the content of the specific compound to the total content of the solvent and the specific compound is a predetermined value or less, the specific compound hardly remains in the solid material. It is estimated that bubbles are hardly generated at the time of molding, and the number of voids formed on the surface of the molded product reduces, and thus the molded product has more excellent surface properties.

The molded product having excellent surface properties refers to a molded product on the surface of which generation of voids (bubbles) resulting from the specific compound is suppressed.

Now, the components contained in the present solid material will be described.

### (Copolymer)

The present solid material contains a copolymer having an E unit, a TFE unit and an A unit.

Hereinafter, unless otherwise specified, a mere description "copolymer" refers to a copolymer having an E unit, a TFE unit and an A unit.

The copolymer is a copolymer having a TFE unit based on tetrafluoroethylene, an E unit based on ethylene, and an A unit based on the specific compound selected from the group consisting of a compound represented by formula (1) and a compound represented by formula (2).

CX¹₂=CX²(CF₂)ₘX³ formula (1)

CF₂=CF-O-(CF₂)ₙF formula (2)

In formula (1), X¹, X² and X³ are each independently a hydrogen atom or a fluorine atom, and m is an integer of 1 to 6.

In formula (2), n is an integer of 1 to 6.

In the compound represented by formula (1), X¹ is preferably a hydrogen atom in view of polymerizability.

X² is preferably a hydrogen atom in view of polymerizability.

X³ is preferably a fluorine atom.

m is preferably an integer of 2 to 6, more preferably an integer of 3 to 6, further preferably 3 or 4.

The compound represented by formula (1) may, for example, be CH₂=CH(CF₂)₂F, CH₂=CH(CF₂)₄F (hereinafter also referred to as "PFBE"), CH₂=CH(CF₂)₆F, CH₂=CF(CF₂)₃F or CH₂=CF(CF₂)₄F, preferably PFBE, CH₂=CH(CF₂)₆F or CH₂=CF(CF₂)₃F, more preferably PFBE.

Specific examples of the compound represented by formula (2) include CF₂=CF-O-(CF₂)F, CF₂=CF-O-(CF₂)₂F, CF₂=CF-O-(CF₂)₃F, CF₂=CF-O-(CF₂)₄F, CF₂=CF-O-(CF₂)₅F, and CF₂=CF-O-(CF₂)₆F. Among them, preferred is CF₂=CF-O-(CF₂)₃F corresponding to a compound wherein n is 3.

The copolymer may have, as the A unit, one of a unit based on a compound represented by formula (1) (hereinafter also referred to as "A1 unit"), and a unit based on a compound represented by formula (2) (hereinafter also referred to as "A2 unit"), or may have both the A1 unit and the A2 unit.

That is, in a case where the copolymer has both the A1 unit and the A2 unit, the "content of the unit A" means a total content of the A1 unit and the A2 unit.

The copolymer is preferably a copolymer having the TFE unit, the E unit and the A1 unit, or a copolymer having the TFE unit, the E unit and the A2 unit, and in view of excellent long-term folding resistance, more preferably a copolymer having the E unit, the TFE unit and the A1 unit.

The content of the TFE unit relative to all units contained in the copolymer is preferably 45.00 to 69.99 mol%, more preferably 48.00 to 64.90 mol%, further preferably 50.00 to 64.50 mol%. When the content is the lower limit value or more, the resulting molded product will be more excellent in heat resistance, and when the content is at most the upper limit value or less, the resulting molded product will be more excellent in mechanical properties.

The content of the E unit relative to all units contained in the copolymer is preferably 30.00 to 54.99 mol%, more preferably 35.00 to 51.90 mol%, further preferably 35.00 to 49.50 mol%. When the content is the lower limit value or more, the resulting molded product will be more excellent in mechanical properties, and when the content is the upper limit value or less, the resulting molded product will be more excellent in heat resistance.

The content of the A unit relative to all units contained in the copolymer is preferably 0.01 to 10.0 mol%, more preferably 0.10 to 5.00 mol%, further preferably 0.50 to 4.00 mol%. When the content is the lower limit value or more, a molded product excellent in abrasion resistance will be formed, and when the content is the upper limit value or less, a molded product excellent in dimensional stability will be formed.

In the copolymer, the total content of the TFE unit and the E unit relative to all units contained in the copolymer is preferably 90.00 to 99.99 mol%, more preferably 95.00 to 99.90 mol%, further preferably 96.00 to 99.50 mol%.

The copolymer may contain a unit based on a monomer other than tetrafluoroethylene, ethylene and the specific compound.

Specific examples of the other monomer include fluoroolefins (for example, vinyl fluoride, vinylidene fluoride, trifluoroethylene, and hexafluoroisobutylene, excluding the specific compound), CF₂=CFORf¹SO₂Y¹ (wherein Rf¹ is a C₁₋₁₀ perfluoroalkylene group optionally containing an oxygen atom between carbon atoms, Y' is a halogen atom or a hydroxy group), CF₂=CFORf²CO₂Y² (wherein Rf² is a C₁₋₁₀ perfluoroalkylene group optionally containing an oxygen atom between carbon atoms, and Y² is a hydrogen atom or a C₁₋₃ alkyl group), CF₂=CF(CF₂)pOCF=CF₂ (wherein p is 1 or 2), fluorinated monomers having a cyclic structure (for example, perfluoro(2,2-dimethyl-1,3-dioxole), 2,2,4-trifluoro-5-trifluoromethoxy-1,3-dioxole, and perfluoro(2-methylene-4-methyl-1,3-dioxolane)), itaconic acid, itaconic anhydride, citraconic acid and citraconic anhydride. Among them, preferred are itaconic acid, itaconic anhydride, citraconic acid and citraconic anhydride, more preferred is itaconic anhydride.

In a case where the copolymer has a unit based on the other monomer, the content of the unit based on the other monomer relative to all units contained in the copolymer is preferably 0.01 to 2.00 mol%, more preferably 0.10 to 1.00 mol%.

As the copolymer, preferred is an embodiment consisting of the TFE unit, the E unit and the A unit, more preferred is an embodiment consisting of the TFE unit, the E unit and the A1 unit.

In view of more excellent grindability of the present solid material, the content of the copolymer in the present solid material is preferably 99 mass% or more, more preferably 99.5 mass% or more, further preferably 99.8 mass% or more. In view of more excellent folding resistance of the molded product, the content of the copolymer in the present solid material is preferably 99.99 mass% or less.

### <Melt flow rate>

The melt flow rate (hereinafter also referred to as "MFR") of the copolymer is preferably 1 to 60 g/10min, more preferably 2 to 50 g/10min.

When MFR of the copolymer is the lower limit value or more, a molded product excellent in flowability when melt-molded will be formed. When MFR of the copolymer is the upper limit value or less, a molded produce excellent in abrasion resistance at high temperature will be formed.

Specific examples of a method of adjusting MFR of the copolymer to be within the above range include a method of adjusting the molecular weight of the copolymer. The larger the molecular weight of the copolymer is, the smaller MFR is.

MFR of the copolymer is obtained by measuring the mass of the solid material which flows out from an orifice with a diameter of 2 mm and a length of 8 mm in 10 minutes at a temperature of 297°C under a load of 49N in accordance with ASTM D3159. The copolymer is the main component of the solid material, and the components other than the copolymer have substantially no influence on the measurement of MFR. Thus, the MFR measured with respect to the solid material can be regarded as MFR of the copolymer.

### <Melting point>

In view of more excellent mechanical strength of the resulting molded product when used at high temperature, the melting point of the copolymer is preferably 210°C or higher, more preferably 215°C or higher, further preferably 220°C or higher.

In view of excellent moldability of the solid material, the upper limit of the melting point of the copolymer is preferably 290°C or lower, more preferably 280°C or lower, particularly preferably 270°C or lower.

Specific examples of a method of adjusting the melting point of the copolymer to be within the above range include a method of lowering the polymerization temperature at the time of production of the copolymer, and a method of adjusting the content of the A unit in the copolymer.

The melting point of the copolymer is a temperature corresponding to an endothermic peak detected when the solid material is heated at 10°C/min in the air atmosphere using a scanning differential thermal analyzer. Like MFR, the melting point measured with respect to the solid material can be regarded as the melting point of the copolymer.

### (Specific compound)

The present solid material contains the specific compound.

Specific examples and a preferred embodiments of the specific compound are the same as those of the specific compound from which the A unit is derived.

The specific compound contained in the present solid material may be both the compound represented by formula (1) and the compound represented by formula (2), but is preferably either one of the compound represented by formula (1) and the compound represented by formula (2), and is more preferably the compound represented by formula (1).

Further, the specific compound from which the A unit is derived, contained in the copolymer, and the specific compound contained in the present solid material, are preferably the same. For example, in a case where the copolymer contains a PFBE unit as the A unit, the present solid material preferably contains PFBE as the specific compound.

In view of more excellent surface properties of the molded product, the content of the specific compound contained in the present solid material is preferably 0.05 mass% or less, more preferably 0.045 mass% or less, further preferably 0.04 mass% or less.

In view of more excellent folding resistance of the molded product, the content of the specific compound contained in the present solid material is preferably 0.0001 mass% or more, more preferably 0.001 mass% or more.

The contents of the specific compound and the solvent (excluding water) to be described below, contained in the solid material, can be measured by analyzing the volatile component when the solid material is heated to 240°C using headspace GC/MS apparatus.

### (Solvent)

The present solid material contains a solvent, provided that the solvent contained in the present solid material is a compound that is different from the specific compound.

Specific examples of the solvent contained in the present solid material include water and organic solvents such as a hydrofluorocarbon, a hydrofluoroether, a perfluorocarbon, a chlorofluorocarbon, an alcohol and a hydrocarbon.

The present solid material preferably contains a fluorine-containing solvent as the solvent. The fluorine-containing solvent refers to an organic solvent containing at least one fluorine atom.

The fluorine-containing solvent may, for example, be a chlorofluorocarbon, a perfluorocarbon, a hydrofluorocarbon or a hydrofluoroether.

The number of carbon atoms of the fluorine-containing solvent is preferably 2 to 7, more preferably 2 to 6.

The present solid material preferably contains at least one member selected from the group consisting of a chlorofluorocarbon, a perfluorocarbon, a hydrofluorocarbon and a hydrofluoroether, more preferably contains at least one member selected from the group consisting of a hydrofluorocarbon and a hydrofluoroether.

The hydrofluorocarbon is a fluorine-containing solvent consisting of a hydrogen atom, a fluorine atom and a carbon atom, and containing no hetero atom other than a fluorine atom.

The number of carbon atoms of the hydrofluorocarbon is preferably 3 to 7, more preferably 4 to 6.

The hydrofluoroether preferably contains one ether bond.

Specific examples of the hydrofluorocarbon include CF₃CFHCF₂CF₂CF₃, CF₃(CF₂)₄H, CF₃CF₂CFHCF₂CF₃, CF₃CFHCFHCF₂CF₃, CF₂HCFHCF₂CF₂CF₃, CF₃(CF₂)₅H, CF₃CH(CF₃)CF₂CF₂CF₃, CF₃CF(CF₃)CFHCF₂CF₃, CF₃CH(CF₃)CFHCF₂CF₃, CF₃CF₂CH₂CH₃, CF₃(CF₂)₃CH₂CH₃, 1,1,2,2-tetrafluorocyclobutane, CF₃CFHCFHCF₃, CF₃CF(CF₃)CFHCFHCF₃, CF₃CH₂CF₂CH₃, CF₂ClCFCl₂, CF₂ClCCl₂F and CF₃CClFCFClCF₃.

Among them, preferred is CF₃(CF₂)₅H or CF₃CH₂CF₂CH₃.

The hydrofluoroether is a fluorine-containing solvent containing a hydrogen atom and a fluorine atom, having an ether bond.

The number of carbon atoms of the hydrofluoroether is preferably 3 to 7, more preferably 4 to 6, further preferably 4 or 5.

The hydrofluoroether preferably has one ether bond.

Specific examples of the hydrofluoroether include CF₃CH₂OCF₂CF₂H, CF₃(CF₃)CFCF₂OCH₃, CF₃(CF₂)₃OCH₃, CF₃(CF₂)₃OC₂H₅, CF₃(CF₂)₂C₃F₇OCH₃ and (CF₃)₂CFOCH₃, preferred is CF₃CH₂OCF₂CF₂H.

In a case where the present solid material contains the fluorine-containing solvent, the content of the fluorine-containing solvent relative to the total mass of the solid material is preferably 0.0001 to 0.5 mass%, more preferably 0.0001 to 0.4 mass%.

In the present solid material, the solvent preferably contains water.

When the present solid material contains water, more excellent handling efficiency at the time of transfer will be achieved.

In a case where the present solid material contains water, the content of the water relative to the total mass of the solid material is preferably 0.01 to 0.5 mass%, more preferably 0.01 to 0.2 mass%.

The content of the water contained in the solid material is obtained from the difference between the weight loss of the solid material measured by a simultaneous TG-DTA analyzer, and the total content of the solvent and the specific compound in the solid material measured by a headspace GC/MS apparatus. More specific measurement method is described in EXAMPLES.

### <Ratio P>

In the present solid material, as described above, the ratio of the content of the specific compound to the total content of the solvent and the specific compound ((the content of the specific compound)/(the content of the solvent + the content of the specific compound)), that is the ratio P, is 50.0 mass% or less.

The ratio P is preferably 0.1 to 50.0 mass%, more preferably 0.5 to 50.0 mass%.

When the ratio P is the upper limit value or less, a molded product more excellent in surface properties will be formed, and when the ratio S is the lower limit value or more, the solid material tends to be less agglomerated, and will be more excellent in flowability.

In the present solid material, the content of the solvent relative to the total mass of the solid material is preferably 0.001 to 2.5 mass%, more preferably 0.01 to 2 mass%, further preferably 0.01 to 1 mass%.

The present solid material may be in the form of granules (beads), pellets or threads.

### [Specific surface area]

The specific surface area of the solid material is preferably 0.3 m²/g or more, more preferably 0.5 m²/g or more, further preferably 5 m²/g or more, particularly preferably 10 m²/g or more, and is preferably 40 m²/g or less, more preferably 30 m²/g or less.

When the specific surface area of the solid material is the lower limit value or more, a molded product more excellent in surface properties can be formed.

The specific surface area of the solid material is a BET specific surface area (unit: m²/g) per mass of the solid material measured by the BET method based on the nitrogen adsorption amount on the surface of the solid material. The specific surface area of the solid material may be measured by using a known specific surface area measuring apparatus (for example, manufactured by MicrotracBEL Corp., tradename BELSORP MINI X" or the like).

The specific surface area of the solid material may be controlled, for example, by adjusting drying conditions when granules containing the copolymer are dried in the method for producing the solid material to be described below.

### [Method for producing solid material]

The present solid material may be produced, for example, by a production method of polymerizing the above monomers (tetrafluoroethylene, ethylene and the specific compound) in a polymerization solvent to produce the copolymer, heating a mixture containing the copolymer, the polymerization solvent and water with stirring for granulation, and drying the obtained granules, wherein drying of the granules is conducted in two steps of a first step of drying under ordinary pressure and a second step of drying in vacuum conditions.

Now, the above method as an example of the method for producing the present solid material will be described.

### <Production of copolymer>

The copolymer may be produced by polymerizing the above monomers (tetrafluoroethylene, ethylene and the specific compound) in a polymerization solvent by a known method such as bulk polymerization, solution polymerization, suspension polymerization or emulsion polymerization, preferably by solution polymerization.

In the production of the copolymer, in addition to the monomers and the polymerization solvent, a polymerization initiator, a chain transfer agent and the like may be used.

The polymerization initiator is preferably a radical polymerization initiator with the temperature at which the half-life is 10 hours being 0 to 100°C, particularly preferably a radical polymerization initiator with the temperature being 20 to 90°C. Specific examples of the polymerization initiator include polymerization initiators exemplified in WO2013/015202.

The polymerization initiator may be used alone or in combination of two or more.

The amount of the polymerization initiator used is preferably 0.01 to 0.9 parts by mass, particularly preferably 0.05 to 0.5 parts by mass per 100 parts by mass of the monomers used.

The polymerization solvent may be a fluorine-containing solvent such as a hydrofluorocarbon, a hydrofluoroether, a perfluorocarbon or a chlorofluorocarbon.

The polymerization solvent may be used alone or in combination of two or more.

The polymerization solvent is preferably the fluorine-containing solvent, more preferably a hydrofluorocarbon, a hydrofluoroether, a perfluorocarbon or a chlorofluorocarbon, further preferably a hydrofluorocarbon or a hydrofluoroether.

The amount of the polymerization solvent used is preferably 5 times or more, more preferably 7 times or more, by mass relative to the amount of the monomers used. Further, it is preferably 20 times or less, more preferably 17 times or less.

In the production of the copolymer, a chain transfer agent may be used, and use of a chain transfer agent is preferred.

In view of a high chain transfer constant and in that a small addition amount is sufficient, the chain transfer agent is preferably an alcohol such as methanol, ethanol, 2,2,2-trifluoroethanol, 2,2,3,3-tetrafluoropropanol, 1,1,1,3,3,3-hexafluoroisopropanol, or 2,2,3,3,3-pentafluoropropanol; a hydrofluorocarbon such as CF₂H₂; a hydrocarbon such as n-pentane, n-hexane or cyclohexane; a ketone such as acetone; a mercaptan such as methyl mercaptan; an ester such as methyl acetate or ethyl acetate; or an ether such as diethyl ether or methyl ethyl ether.

In view of a higher chain transfer constant and high stability of the terminal group of the copolymer, among them, preferred is at least one member selected from the group consisting of an alcohol, a hydrocarbon and a hydrofluorocarbon, more preferred is at least one member selected from the group consisting of an alcohol and a hydrocarbon, further preferred is an alcohol. Among the alcohol, methanol or ethanol is particularly preferred. In particular, in view of reactivity and availability, methanol is most preferred. The chain transfer agent may be used in combination of two or more.

The amount of the chain transfer agent used, relative to the amount of the monomers used, is preferably 0.001 times or more by mass, more preferably 0.005 times or more. The amount is preferably 5 times or less, more preferably 4 times or less.

The polymerization temperature is preferably 15 to 90°C, more preferably 20 to 85°C, particularly preferably 25 to 80°C. When the polymerization temperature is the lower limit value or more, excellent polymerizability will be achieved. When the polymerization temperature is the upper limit value or less, the melting point of the copolymer will be improved.

The polymerization pressure is preferably 0.5 to 3.0 MPa, particularly preferably 0.9 to 2.5 MPa.

The polymerization time is preferably 1 to 12 hours.

### <Granulation>

Then, granulation is conducted by heating a mixture containing the obtained copolymer, the polymerization solvent and water with stirring to produce granules containing the copolymer.

In the granulation, first, a mixture containing the copolymer, the polymerization solvent and water is prepared. The mixture may be prepared, for example, by mixing a slurry containing the copolymer and the polymerization solvent with water.

For preparation of the mixture, the slurry after the production of the copolymer may be used as it is, or the slurry as concentrated or the slurry as diluted with a solvent may be used. The solvent for dilution may be the same as or different from the solvent used as the polymerization solvent, and is preferably the same.

The amount of the water used in the granulation relative to the total amount of the copolymer and the polymerization solvent may be 20 to 500 vol%, and is preferably 50 to 300 vol%.

The mixture may be prepared by adding water to a polymerization vessel containing the slurry after the production of the copolymer, or by transferring the slurry to a container (granulation vessel) different from the polymerization vessel and mixing the slurry with water in the container. It is preferred to transfer the slurry containing the copolymer and the polymerization solvent from the polymerization vessel to a granulation vessel which is preliminarily filled with water, followed by mixing.

The granulation vessel may be a container which can be closed, and which is equipped with a stirring impeller to stir the content, a heating means to heat the container or the content, and a discharge means to discharge separated gas. The stirring impeller may be a conventional impeller such as a turbine impeller or an anchor impeller. The heating means may, for example, be a jacket, a water bath, an oil bath or steam heating.

The heating temperature of the mixture at the time of granulation is preferably within a range of 25 to 110°C, more preferably within a range of 30 to 90°C.

The pressure inside the container at the time of granulation is preferably 0.01 to 0.8 MPa, more preferably 0.01 to 0.7 MPa, further preferably 0.01 to 0.6 MPa.

In this specification, the pressure refers to a gauge pressure based on the atmospheric pressure.

The granulation time may, for example, be 1 to 24 hours, and is preferably 1 to 15 hours.

The timing when the granulation is terminated may, for example, be when the volume of the mixture contained in the granulation vessel no more decreases. It can be estimated that at a point when the volume of the mixture in the polymerization vessel no more decreases for a predetermined time and reaches a constant value, the components such as the solvent to be discharged from the granulation vessel during the granulation have almost been discharged.

### <Drying>

Then, the granules containing the copolymer obtained by the granulation are dried to produce the present solid material containing the copolymer.

With a view to producing the solid material with a low ratio P, it is preferred to dry the granules containing the copolymer in two steps of a first step of drying under ordinary pressure conditions and a second step of drying under vacuum conditions to produce the solid material containing the copolymer.

The ordinary pressure conditions refer to a pressure inside the container for the drying treatment of 0 to 0.1 MPa, and the vacuum conditions refer to a pressure inside the container for the drying treatment of -0.01 to -0.1 MPa.

Inside the granules obtained by the above granulation, moisture, the polymerization solvent and the specific compound (hereinafter also generally referred to as "volatile substances") are contained, and in the subsequent drying treatment, these components are volatilized and the solid material having pores on its surface is produced. According to studies by the present inventors, it was found that the solid material with a small specific surface area is obtained when the granules obtained by the granulation is dried only under vacuum conditions without being dried under ordinary pressure conditions. Thus, it is estimated that when the granules are dried only under vacuum conditions, the volatile substances are quickly vaporized in the vicinity of the surface, and the pores formed in the vicinity of the surface tend to be small, and the volatile substances (particularly the specific compound) are likely to remain inside the solid material. On the other hand, it was found that the solid material with a large specific surface area is formed in a case where two steps drying is conducted such that the granules obtained by the granulation are dried under ordinary pressure conditions and then dried under vacuum conditions. Thus, it is estimated that by conducting two steps drying, the pores formed in the vicinity of the surface tend to be large, drying proceeds even inside the granules, and the volatile substances are quickly vaporized and separated, and as a result, the solid material with a low ratio P is obtained.

Specific examples of the drying method include a method of transferring the granules from the container for granulation to a container for drying such as a drying machine, and heating the granules under predetermined pressure conditions to vaporize and separate volatile substances contained in the granules.

The drying machine used for drying may, for example, be a batch rotary drier, an indirect heating drying machine, a vacuum drying machine or a hot wind drying machine.

The pressure in the container for conducting the first step drying is preferably 0 to 0.1 MPa, more preferably 0 to 0.08 MPa.

The first step drying temperature is preferably within a range of 30 to 150°C, more preferably within a range of 35 to 130°C.

The first step drying time is preferably 1 to 24 hours, more preferably 1 to 12 hours.

The pressure in the container for conducting the second step drying is preferably - 0.01 to -0.1 MPa, more preferably -0.02 to -0.1 MPa.

The second step drying temperature is preferably within a range of 50 to 150°C, more preferably within a range of 60 to 150°C.

The second step drying time is preferably 1 to 24 hours, more preferably 1 to 12 hours.

It is preferred that the first step drying time is 30 to 70% and the second step drying time is 70 to 30% of the entire drying time, and it is more preferred that the first step drying time is 30 to 60% and the second step drying time is 40 to 70%.

The solid material obtained by the drying may be melted and extruded by an extruder to form the solid material in other shape such as pellets or threads.

### [Composition]

The composition of the present invention (hereinafter also referred to as "the present composition") contains the present solid material, and at least one member selected from the group consisting of a resin other than the copolymer, a thermal stabilizer, an antioxidant, a coloring agent, an ultraviolet absorber, a filler, a crosslinking agent, a crosslinking aid and an organic peroxide (hereinafter also referred to as "other component"). By using the present composition, which contains the present solid material, it is possible to form a molded product excellent in the surface properties.

The present composition is preferably a solid.

The content of the present solid material relative to the total mass of the present composition is preferably 50 mass% or more and less than 100 mass%, more preferably 70 mass% or more and less than 100 mass%, further preferably 90 mass% or more and less than 100 mass%.

The present composition preferably contains no solvent and specific compound other than the solvent and the specific compound derived from the present solid material.

The ratio of the content of the specific compound to the total content of the solvent and the specific compound in the present composition is preferably 0.1 to 50.0 mass%, more preferably 0.5 to 50.0 mass%.

The content of the "other component" in the present composition is preferably 0.0000001 to 70 parts by mass, more preferably 0.0000005 to 60 parts by mass, further preferably 0.000001 to 50 parts by mass, per 100 parts by mass of the copolymer in the present composition.

A method for producing the present composition may be a method of melt-kneading the present solid material or a powder obtained by grinding the present solid material, and the other component used as the case requires, by a known method.

The present solid material may be ground by a known grinding machine such as a rotary mill, a hammer mill, a turbo mill or a jet mill.

### [Molded product]

The molded product of the present invention is obtained by molding the present solid material or the present composition. The molded product of the present invention, which is formed by using the present solid material, has a small number of voids formed on its surface and is excellent in surface properties.

Specific examples of the molding method include injection molding, extrusion, blow molding, press molding, rotary molding, electrostatic coating and spray forming.

The molded product of the present invention may also be a coating film formed by using the present solid material or the present composition. A method of forming the coating film includes a method of forming a coating film using a powder obtained by grinding the present solid material or the present composition containing the powder, by rotational molding, electrostatic coating or spray forming.

The thickness of the coating film is preferably 1 µm to 10 mm, more preferably 50 µm to 5 mm, further preferably 100 µm to 3 mm.

Specific examples of the molded product of the present invention include nuts, bolts, joints, films, bottles, gaskets, wire coverings, tubes, hoses, pipes, valves, sheets, seals, packings, tanks, rollers, containers, cocks, connectors, filter housings, filter cages, flow meters, pumps, wafer carriers, and wafer boxes.

The present solid material, the present composition and the above-described molded product can be used in the following applications.
Fluid transfer members for food manufacturing equipment, such as food packaging films, lining materials for fluid transfer lines used in food manufacturing processes, packings, sealing materials, and sheets;
Chemical liquid transfer members such as medicine stoppers, packaging films, lining materials for fluid transfer lines used in pharmaceutical manufacturing processes, packings, sealing materials, and sheets;
Inner lining members for chemical liquid tanks and piping in chemical plants or semiconductor factories;
Fuel transfer members such as O-rings (square rings), tubes, packings, valve cores, hoses, and sealing materials used in automotive fuel systems and peripheral devices, as well as hoses and sealing materials used in automotive AT (automatic transmission) devices;
Other automotive parts such as carburetor flange gaskets, shaft seals, valve stem seals, sealing materials, and hoses used in automotive engines and peripheral devices, as well as brake hoses, air conditioning hoses, radiator hoses, and wire covering materials;
Chemical liquid transfer members for semiconductor devices such as O-rings (square rings), tubes, packings, valve cores, hoses, sealing materials, rolls, gaskets, diaphragms, and joints used in semiconductor manufacturing equipment;
Coating and ink members such as coating rolls, hoses, tubes, and ink containers for painting equipment;
Food and beverage transfer members such as tubes, hoses, belts, packings, and joints including tubes or hoses for food and beverages; food packaging materials; and glass cooking appliances;
Waste liquid transport members such as tubes and hoses for waste liquid transport;
High-temperature liquid transport members such as tubes and hoses for high-temperature liquid transport;
Steam piping members such as tubes and hoses for steam piping;
Anti-corrosion tapes for piping, such as tapes wound around piping on ship decks and similar structures;
Various coating materials such as wire coating materials, optical fiber coating materials, transparent surface coating materials and back surface agents provided on the light-incident side surface of photovoltaic elements in solar cells;
Sliding members such as diaphragms for diaphragm pumps and various packings;
Agricultural films, and weather-resistant covers for various roofing materials and side walls;
Interior materials used in the construction field, and coating materials for glass products such as non-combustible fireproof safety glass;
Lining materials such as laminated steel sheets used in home appliance fields;
Carrier films for fuel cells.

Among these, the molded product of the present invention is particularly suitable for chemical liquid transfer members and coating materials for semiconductor devices, due to its excellent surface properties.

### EXAMPLES

Now, the present invention will be described in further detail with reference to Ex. Ex. 1 to 12 are Examples of the present invention, and Ex. 13 to 14 are Comparative Examples. However, it should be understood that the present invention is by no means restricted thereto.

Various measurement methods and evaluation methods are as follows.

### [Measurement]

### <Content of solvent and specific compound in solid material>

The contents of the solvent and the specific compound remaining in the solid material were obtained by heating the solid material to 240°C by a headspace GC/MS apparatus and analyzing gas components present in the gaseous phase in the head space to determine the contents (mass%) of the components relative to the total mass of the copolymer.

The content of the water contained in the solid material was calculated from the difference between the weight loss of the solid material measured by a simultaneous TG-DTA analyzer and the total content of the solvent and the specific compound in the solid material measured by a headspace GC/MS apparatus. The weight loss of the solid material was obtained by heating the solid material using a TG-DTA at a heating rate of 10 °C/min from 30°C to 550°C and measuring the weights of the solid material before and after heating.

### <Contents of units in copolymer>

The contents (mol%) of units in the copolymer were calculated from the total fluorine amount measurement and melt F-NMR measurement results. The content of the E unit in the copolymer was calculated by H and ¹³C-NMR measurement.

### <MFR (Melt flow rate)>

Using a melt index (manufactured by Technol Seven Co., Ltd.), in accordance with ASTM D3159, the mass (g) of the solid material which flowed out from an orifice with a diameter of 2 mm and a length of 8 mm in 10 minutes at a temperature of 297°C under a load of 49N was measured, and the measured value was taken as MFR (g/10min) of the copolymer.

### <Melting point>

The melting point (°C) of the copolymer was determined from an endothermic peak detected when the solid material was heated in the air atmosphere at a heating rate of 10°C/min up to 300°C using a differential scanning calorimeter (manufactured by Hitachi High-Tech Science Corporation, "DSC7020").

### <Specific surface area>

The specific surface area of the solid material was measured by a BET specific surface area measuring apparatus (manufactured by MicrotracBEL Corp., tradename "BELSORP MINI X") by the BET method based on the nitrogen adsorption amount of the solid material on the surface of particles.

From the obtained value of the specific surface area, the specific surface area of the solid material in each Ex. was evaluated based on the following standards.

### (Evaluation standard)

⊚: measured value of specific surface area being 20 m²/g or more.
○: measured value of specific surface area being 10 m²/g or more and less than 20 m²/g.
△: measured value of specific surface area being 0.3 m²/g or more and less than 10 m²/g.
×: measured value of specific surface area being less than 0.3 m²/g.

### [Evaluation test]

### <Surface properties>

An injection molding machine (ROBOSHOT α-50C, manufactured by FANUC CORPORATION) was used, a mold having dimensions so as to obtain a molded product of 12 mm in width, 120 mm in length and 3 mm in thickness, and a tunnel gate with a gate tip size of 1.0 mm, were used.

The solid material obtained in each Ex. was molded under molding conditions of cylinder temperature of 310°C, a mold temperature of 150°C, an injection rate of 20 mm/sec, a holding pressure of 78.4 MPa, a holding time of 3 sec, a cooling time of 30 sec to obtain a molded product. The obtained injection-molded product was visually observed and evaluated based on the following standards.

### (Evaluation standards)

O: No void formed and no outer appearance failure occurred.
×: Voids formed.

### [Ex. 1]

A stainless steel polymerization vessel having an internal capacity of 1.3 L (liter), equipped with a stirrer and a jacket, was evacuated of air, and 0.8 L of CF₃CH₂CF₂CH₃ (hereinafter also referred to as "HFC-365mfc"), 8.7 g of methanol, and 12.1 g of CH₂=CH(CF₂)₄F (PFBE) and 0.4 g of CF₂=CFO(CF₂)₂CF₃ (hereinafter also referred to as "PPVE") as the specific compounds, were charged. With stirring the mixture, a mixed gas of tetrafluoroethylene (TFE) and ethylene (E) in a TFE/E molar ratio of 83/17 (mol%) was added to pressurize the interior of the polymerization vessel to 1.5 MPaG (gauge pressure) and the temperature inside the polymerization vessel was adjusted to 72°C (polymerization temperature). After the temperature stabilized, 17 mL of tert-butylperoxy pivalate (hereinafter also referred to as "PBPV") 1 mass% solution (solvent: CF₃CH₂OCF₂CF₂H (hereinafter also referred to as "AE-3000") was injected to initiate the polymerization.

During the polymerization, a TFE/E mixed gas at a TFE/E molar ratio of 54/46 (mol%) was added to keep a constant internal pressure of 1.5 MPaG. In addition, every consumption of 10 g of the TFE/E mixed gas added during the polymerization, 1.2 mL (an amount corresponding to 3.1 mol% relative to the total number of moles of TFE and E) of PFBE was added. When the amount of the TFE/E mixed gas added reached 100 g, the polymerization vessel was cooled to terminate the polymerization thereby to obtain a copolymer of TFE, ethylene, PFBE and PPVE.

Then, the polymerization vessel was purged of remaining monomer gas to a pressure inside the polymerization vessel of 0.01 MPa, the slurry was transferred to a container having an internal capacity of 2.6 L, and water in the same volume of the slurry was added. The slurry was heated with stirring to vaporize the solvent and to produce granules containing the copolymer (granulation). During the granulation, the interior of the container was heated within a range of 30 to 100°C. At a point when it was visually confirmed that the amount of the mixture containing the granules in the container no more decreased and reached a constant value, the granulation was terminated to obtain granules. The obtained granules were put in an oven heated to 120°C and dried under ordinary pressure conditions of 0.01 MPa for 90 minutes and then the oven was depressurized and the granules were dried under vacuum conditions of -0.07 MPa for 60 minutes to obtain granular solid material 1.

As a result of measurement by the above method, it was confirmed that the solid material 1 contained water, HFC-365mfc, PFBE and PPVE.

### [Ex. 2]

A copolymer of TFE, ethylene and PFBE was produced in the same manner as in Ex. 1 except that at the initial charging to the polymerization vessel, the amount of methanol was changed to 10.6 g and the amount of PFBE was changed to 9.6 g and no PPVE was charged to the polymerization vessel; that the amount of the PBPV 1 mass% solution (solvent: AE-3000) injected to the polymerization vessel after pressurization by addition of the TFE/E mixed gas and heating, was changed to 13 mL; and that the amount of PFBE added every consumption of 10 g of the TFE/E mixed gas added during the polymerization was changed to 1.0 mL.

Then, in the same manner as in Ex. 1, granules containing the copolymer were obtained, and the obtained granules were put in an oven heated to 120°C and dried under ordinary pressure conditions of 0.01 MPa for 150 minutes, and then the oven was depressurized and the granules were dried under vacuum conditions of -0.05 MPa for 180 minutes to obtain granular solid material 2.

As a result of measurement by the above method, it was confirmed that the solid material 2 contained water, HFC-365mfc and PFBE.

### [Ex. 3]

A copolymer of TFE, ethylene and PFBE was produced in the same manner as in Ex. 2 except that at the initial charging to the polymerization vessel, the amount of methanol was changed to 4.6 g and the amount of PFBE was changed to 3.4 g; that the amount of the PBPV 1 mass% solution (solvent: AE-3000) injected to the polymerization vessel after pressurization by addition of the TFE/E mixed gas and heating, was changed to 5 mL; and that the amount of PFBE added every consumption of 10 g of the TFE/E mixed gas added during the polymerization was changed to 0.4 mL.

Then, in the same manner as in Ex. 1, granules containing the copolymer were obtained, and the obtained granules were put in an oven heated to 120°C and dried under ordinary pressure conditions of 0.01 MPa for 180 minutes, and then the oven was depressurized and the granules were dried under vacuum conditions of -0.09 MPa for 240 minutes to obtain granular solid material 3.

As a result of measurement by the above method, it was confirmed that the solid material 3 contained water, HFC-365mfc and PFBE.

### [Ex. 4]

A copolymer of TFE, ethylene and PFBE was produced in the same manner as in Ex. 2 except that at the initial charging to the polymerization vessel, 0.8 L of 2,3-dichlorooctafluorobutane was added instead of 0.8 L of HFC-365mfc, the amount of methanol was changed to 20.8 g and the amount of PFBE was changed to 5.9 g; that the amount of the PBPV 1 mass% solution (solvent: AE-3000) injected to the polymerization vessel after pressurization by addition of the TFE/E mixed gas and heating, was changed to 5 mL; and that the amount of PFBE added every consumption of 10 g of the TFE/E mixed gas added during the polymerization was changed to 0.4 mL.

Then, in the same manner as in Ex. 1, granules containing the copolymer were obtained, and the obtained granules were put in an oven heated to 120°C and dried under ordinary pressure conditions of 0.01 MPa for 95 minutes, and then the oven was depressurized and the granules were dried under vacuum conditions of -0.09 MPa for 85 minutes to obtain granular solid material 4.

As a result of measurement by the above method, it was confirmed that the solid material 4 contained water, 2,3-dichlorooctafluorobutane and PFBE.

### [Ex. 5]

A copolymer of TFE, ethylene and PFBE was produced in the same manner as in Ex. 2 except that at the initial charging to the polymerization vessel, the amount of methanol was changed to 16.6 g and the amount of PFBE was changed to 6.7 g; that the amount of the PBPV 1 mass% solution (solvent: AE-3000) injected to the polymerization vessel after pressurization by addition of the TFE/E mixed gas and heating, was changed to 9 mL; and that the amount of PFBE added every consumption of 10 g of the TFE/E mixed gas added during the polymerization was changed to 0.7 mL.

Then, in the same manner as in Ex. 1, granules containing the copolymer were obtained, and the obtained granules were put in an oven heated to 120°C and dried under ordinary pressure conditions of 0.01 MPa for 85 minutes, and then the oven was depressurized and the granules were dried under vacuum conditions of -0.07 MPa for 120 minutes to obtain granular solid material 5.

As a result of measurement by the above method, it was confirmed that the solid material 5 contained water, HFC-365mfc and PFBE.

### [Ex. 6]

A copolymer of TFE, ethylene and PFBE was produced in the same manner as in Ex. 2 except that at the initial charging to the polymerization vessel, the amount of methanol was changed to 10.4 g and the amount of PFBE was changed to 7.1 g; that the amount of the PBPV 1 mass% solution (solvent: AE-3000) injected to the polymerization vessel after pressurization by addition of the TFE/E mixed gas and heating, was changed to 10 mL; and that the amount of PFBE added every consumption of 10 g of the TFE/E mixed gas added during the polymerization was changed to 0.8 mL.

Then, in the same manner as in Ex. 1, granules containing the copolymer were obtained, and the obtained granules were put in an oven heated to 120°C and dried under ordinary pressure conditions of 0.01 MPa for 150 minutes, and then the oven was depressurized and the granules were dried under vacuum conditions of -0.05 MPa for 180 minutes to obtain granular solid material 6.

As a result of measurement by the above method, it was confirmed that the solid material 6 contained water, HFC-365mfc and PFBE.

### [Ex. 7]

A copolymer of TFE, ethylene and PFBE was produced in the same manner as in Ex. 2 except that at the initial charging to the polymerization vessel, the amount of methanol was changed to 15.8 g and the amount of PFBE was changed to 5.9 g; that the amount of the PBPV 1 mass% solution (solvent: AE-3000) injected to the polymerization vessel after pressurization by addition of the TFE/E mixed gas and heating, was changed to 8 mL; and that the amount of PFBE added every consumption of 10 g of the TFE/E mixed gas added during the polymerization was changed to 0.7 mL.

Then, in the same manner as in Ex. 1, granules containing the copolymer were obtained, and the obtained granules were put in an oven heated to 120°C and dried under ordinary pressure conditions of 0.01 MPa for 140 minutes, and then the oven was depressurized and the granules were dried under vacuum conditions of -0.05 MPa for 140 minutes to obtain granular solid material 7.

As a result of measurement by the above method, it was confirmed that the solid material 7 contained water, HFC-365mfc and PFBE.

### [Ex. 8]

A copolymer of TFE, ethylene and PFBE was produced in the same manner as in Ex. 2 except that at the initial charging to the polymerization vessel, 0.8 L of CF₃(CF₂)₄CF₂H (hereinafter also referred to as "C6H") was added instead of 0.8 L of HFC-365mfc, the amount of methanol was changed to 9.4 g and the amount of PFBE was changed to 4.3 g; that 6 mL of a PBPV 1 mass% solution (solvent: C6H) was injected instead of the PBPV 1 mass% solution (solvent: AE-3000) to the polymerization vessel after pressurization by addition of the TFE/E mixed gas and heating; and that the amount of PFBE added every consumption of 10 g of the TFE/E mixed gas added during the polymerization was changed to 0.5 mL.

Then, in the same manner as in Ex. 1, the solvent was vaporized, and the obtained solid material was put in an oven heated to 130°C and dried under ordinary pressure conditions of 0.001 MPa for 90 minutes, and then the oven was depressurized and the solid material was dried under vacuum conditions of -0.1 MPa for 60 minutes to obtain granular solid material 8.

As a result of measurement by the above method, it was confirmed that the solid material 8 contained water, C6H and PFBE.

### [Ex. 9]

A stainless steel polymerization vessel having an internal capacity of 1.3 L (liter), equipped with a stirrer and a jacket, was evacuated of air, and 0.8 L of C6H, 3.9 g of methanol and 14.2 g of PFBE as the specific compound, were charged. While stirring the mixture, a mixed gas of TFE and E in a TFE/E molar ratio of 88/12 (mol%) was added to pressurize the interior of the polymerization vessel to 1.5 MPaG and the temperature inside the polymerization vessel was adjusted to 66°C (polymerization temperature). After the temperature stabilized, 19 mL of a PBPV 1 mass% solution (solvent: C6H) was injected to initiate the polymerization.

During the polymerization, a TFE/E mixed gas at a TFE/E molar ratio of 60/40 (mol%) was added to keep a constant internal pressure of 1.5 MPaG. In addition, every consumption of 10 g of the TFE/E mixed gas added during the polymerization, 1.4 mL (an amount corresponding to 1.4 mol% relative to the total number of moles of TFE and E) of PFBE was added. When the amount of the TFE/E mixed gas added reached 100 g, the polymerization vessel was cooled to terminate the polymerization thereby to obtain a copolymer of TFE, ethylene and PFBE.

Then, the polymerization vessel was purged of remaining monomer gas to a pressure inside the polymerization vessel of 0.005 MPa (ordinary pressure), the slurry was transferred to a container having an internal capacity of 2.6 L, and water in the same volume of the slurry was added. The slurry was heated with stirring to vaporize the solvent and to produced granules containing the copolymer (granulation). During the granulation, the interior of the container was heated within a range of 30 to 100°C. At a point when it was visually confirmed that the amount of the mixture containing the granules in the vessel no more decreased and reached a constant value, the granulation was terminated to obtain granules. The obtained granules were put in an oven heated to 120°C and dried under ordinary pressure conditions of 0.008 MPa for 150 minutes and then the oven was depressurized and the granules were dried under vacuum conditions of -0.05 MPa for 180 minutes to obtain granular solid material 9.

As a result of measurement by the above method, it was confirmed that the solid material 9 contained water, C6H and PFBE.

### [Ex. 10]

A copolymer of TFE, ethylene and PFBE was produced in the same manner as in Ex. 2 except that at the initial charging to the polymerization vessel, 0.8 L of AE-3000 was added instead of 0.8 L of HFC-365mfc, the amount of methanol was changed to 7.7 g and the amount of PFBE was changed to 9.6 g; that the amount of the PBPV 1 mass% solution (solvent: AE-3000) injected to the polymerization vessel after pressurization by addition of the TFE/E mixed gas and heating, was changed to 13 mL; and that the amount of PFBE added every consumption of 10 g of the TFE/E mixed gas added during the polymerization was changed to 1 mL.

Then, in the same manner as in Ex. 1, the solvent was vaporized, and the obtained solid material was put in an oven heated to 130°C and dried under ordinary pressure conditions of 0.01 MPa for 150 minutes, and then the oven was depressurized and the solid material was dried under vacuum conditions of -0.05 MPa for 180 minutes to obtain granular solid material 10.

As a result of measurement by the above method, it was confirmed that the solid material 10 contained water, AE-3000 and PFBE.

### [Ex. 11]

A stainless steel polymerization vessel having an internal capacity of 1.3 L, equipped with a stirrer and a jacket was evacuated of air, and 0.8 L of AE-3000, 11.3 g of methanol, and 4.7 g of CH₂=CF(CF₂)₂CF₂H (hereinafter sometimes referred to as "C3olf") as the specific compound were charged. A mixed gas of TFE and E at a TFE/E molar ratio of 86/14 (mol%) was added to pressurize the interior of the polymerization vessel to 1.5 MPaG, and the temperature inside the polymerization vessel was adjusted to 72°C (polymerization temperature). After the temperature stabilized, 8 mL of PBPV 1 mass% solution (solvent: AE-3000) was injected to initiate the polymerization.

During the polymerization, a TFE/E mixed gas at a TFE/E molar ratio of 57/43 (mol%) was added so as to keep a constant internal pressure of 1.5 MPaG. Further, every consumption of 10 g of the TFE/E mixed gas added during the polymerization, 0.7 mL (an amount corresponding to 1.6 mol% relative to the total number of mols of TFE and E) of C3olf was added. When the amount of the TFE/E mixed gas added reached 100 g, the polymerization vessel was cooled to terminate the polymerization to obtain a copolymer of TFE, ethylene and PFBE.

Then, in the same manner as in Ex. 1, the solvent was volatilized, the obtained solid material was put in an oven heated at 130°C and dried under ordinary pressure conditions of 0.01 MPa for 85 minutes, and then the oven was depressurized and the solid material was dried under vacuum conditions of -0.09 MPa for 60 minutes to obtain granular solid material 11.

As a result of the measurement by the above method, it was confirmed that the solid material 11 contained water, AE-3000 and C3olf.

### [Ex. 12]

A copolymer of TFE, ethylene and PFBE was produced in the same manner as in Ex. 11 except that at the initial charging to the polymerization vessel, 9.0 g of CH₂=CH(CF₂)₅CF₃ (hereinafter also referred to as "C6olf") as the specific compound was added instead of 4.7 g of C3olf, and the amount of methanol was changed to 12.5 g: that the amount of the PBPV 1 mass% solution (solvent: AE-3000) injected to the polymerization vessel after pressurization by addition of the TFE/E mixed gas and heating, was changed to 7 mL; and that every consumption of 10 g of the TFE/E mixed gas added during the polymerization, 0.5 mL (an amount corresponding to 1.4 mol% relative to the total number of moles of TFE and E) of C6olf was added.

Then, in the same manner as in Ex. 1, the solvent was vaporized, and the obtained solid material was put in an oven heated to 130°C and dried under ordinary pressure conditions of 0.01 MPa for 90 minutes, and then the interior of the oven was depressurized and the solid material was dried under vacuum conditions of -0.09 MPa for 60 minutes to obtain granular solid material 12.

As a result of measurement by the above method, it was confirmed that the solid material 12 contained water, AE-3000 and C6olf.

### [Ex. 13]

A copolymer of TFE, ethylene and PFBE was produced in the same manner as in Ex. 2.

Then, in the same manner as in Ex. 1, granules containing the copolymer were obtained, and the obtained granules were put in an oven heated to 120°C and dried under vacuum conditions of -0.05 MPa for 330 minutes to obtain granular solid material 13.

As a result of measurement by the above method, it was confirmed that the solid material 13 contained water, HFC-365mfc, PFBE and PPVE.

### [Ex. 14]

A copolymer of TFE, ethylene and PFBE was produced in the same manner as in Ex. 9.

Then, in the same manner as in Ex. 1, granules containing the copolymer were obtained, and the obtained granules were put in an oven heated to 120°C and dried under vacuum conditions of -0.05 MPa for 330 minutes to obtain granular solid material 14.

As a result of measurement by the above method, it was confirmed that the solid material 14 contained water, HFC-365mfc, PFBE and PPVE.

With respect to the solid material produced in each Ex., MFR, the composition and the melting point of the copolymer contained in the solid material, and the content of the components, the ratio P and the specific surface area of the solid material were measured by the above methods. The measurement results are shown in the following Table 1.

In Table 1, the composition and the physical properties of the copolymer obtained in each Ex., and the measurement results and the evaluation results of the solid material are shown.

In Table, the "TFE unit" column, the "E unit" column and the "A unit column" represent the contents (unit: mol%) of the respective units relative to all units contained in the solid material in each Ex.

**Table 1**

| Ex. | Copolymer composition | | | | | | Copolymer physical properties | | Solid material | | Evaluation |
|---|---|---|---|---|---|---|---|---|---|---|---|
| | TFE unit | E unit | A1 unit | | A2 unit | | MFR | Melting point | Ratio P | Specific surface area | Surface properties |
| | mol% | mol% | Type | mol% | Type | mol% | g/10min | °C | mass% | m²/g | |
| 1 | 53.00 | 43.80 | PFBE | 3.10 | PPVE | 0.10 | 27 | 241 | 9.8 | ⊚ | ○ |
| 2 | 53.20 | 44.30 | PFBE | 2.50 | - | - | 26 | 247 | 19.8 | ○ | ○ |
| 3 | 54.80 | 44.20 | PFBE | 1.00 | - | - | 9 | 260 | 1.1 | ⊚ | ○ |
| 4 | 53.40 | 45.00 | PFBE | 1.60 | - | - | 45 | 255 | 6.9 | ⊚ | ○ |
| 5 | 53.30 | 44.90 | PFBE | 1.80 | - | - | 23 | 253 | 21.1 | ○ | ○ |
| 6 | 53.30 | 44.80 | PFBE | 1.90 | - | - | 8 | 252 | 40.8 | Δ | O |
| 7 | 54.20 | 44.20 | PFBE | 1.60 | - | - | 20 | 255 | 29.5 | Δ | O |
| 8 | 54.50 | 44.30 | PFBE | 1.20 | - | - | 4 | 259 | 1.0 | ⊚ | ○ |
| 9 | 57.30 | 39.10 | PFBE | 3.60 | - | - | 23 | 221 | 17.3 | ○ | ○ |
| 10 | 53.40 | 44.10 | PFBE | 2.50 | - | - | 16 | 247 | 11.7 | ○ | ○ |
| 11 | 56.80 | 41.60 | C3olf | 1.60 | - | - | 18 | 254 | 4.7 | ⊚ | ○ |
| 12 | 56.80 | 41.80 | C6olf | 1.40 | - | - | 20 | 253 | 4.7 | ⊚ | ○ |
| 13 | 53.20 | 44.30 | PFBE | 2.50 | - | - | 26 | 247 | 64.0 | × | × |
| 14 | 54.20 | 44.30 | PFBE | 1.20 | - | - | 4 | 259 | 52.0 | × | × |

As shown in Table, it was confirmed that by using the solid material having a ratio of the content of the specific compound relative to the total content of the solvent and the specific compound of 50.0 mass% or less, a molded product excellent in surface properties can be produced (Ex. 1 to 12).

The entire disclosure of Japanese Patent Application No. 2023-221100 filed on December 27, 2023, including specification, claims and summary is incorporated herein by reference in its entirety.

## Claims

1. A solid material comprising:
a copolymer having a unit based on tetrafluoroethylene, a unit based on ethylene, and a unit based on a specific compound selected from the group consisting of a compound represented by formula (1) and a compound represented by formula (2),
the specific compound, and
a solvent that is a compound different from the specific compound,
wherein the ratio of the content of the specific compound to the total content of the solvent and the specific compound is 50.0 mass% or less:
CX¹₂=CX²(CF₂)ₘX³ (1)
CF₂=CF-O-(CF₂)ₙF (2)
in formula (1), X¹, X² and X³ are each independently a hydrogen atom or a fluorine atom, and m is an integer of 1 to 6,
in formula (2), n is an integer of 1 to 6.

2. The solid material according to Claim 1, wherein the content of the unit based on tetrafluoroethylene relative to all units contained in the copolymer is 48.00 to 64.90 mol%.

3. The solid material according to Claim 1 or 2, wherein the content of the unit based on ethylene relative to all units contained in the copolymer is 35.00 to 51.90 mol%.

4. The solid material according to Claim 1 or 2, wherein the content of the unit based on the specific compound in the copolymer relative to all units contained in the copolymer is 0.10 to 5.00 mol%.

5. The solid material according to Claim 1 or 2, wherein the solvent contains a fluorine-containing solvent.

6. The solid material according to Claim 5, wherein the fluorine-containing solvent contains at least one member selected from the group consisting of a chlorofluorocarbon, a perfluorocarbon, a hydrofluorocarbon and a hydrofluoroether.

7. The solid material according to Claim 1 or 2, wherein the solvent contains water.

8. The solid material according to Claim 1 or 2, wherein the content of the solvent relative to the total mass of the solid material is 0.01 to 2 mass%.

9. The solid material according to Claim 1 or 2, which has a specific surface area of 0.3 m²/g or more.

10. A composition comprising the solid material as defined in Claim 1 or 2, and at least one component selected from the group consisting of a resin other than the copolymer, a thermal stabilizer, an antioxidant, a coloring agent, an ultraviolet absorbing agent, a filler, a crosslinking agent, a crosslinking aid, and an organic peroxide.

11. A molded product, obtained by molding the solid material as defined in Claim 1 or 2.

12. A molded product, obtained by molding the composition as defined in Claim 10.
